(19) Europäisches Patentamt
European Patent Office
Office européen des brevets

(11) EP 1 209 193 A2

(12) **EUROPÄISCHE PATENTANMELDUNG**

(43) Veröffentlichungstag:
**29.05.2002 Patentblatt 2002/22**

(21) Anmeldenummer: **01123612.2**

(22) Anmeldetag: **02.10.2001**

(51) Int Cl.[7]: **C08L 21/00**, C08J 3/205, C08K 9/06, C08K 5/54 // C08L21:00

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **15.11.2000 DE 10056696**

(71) Anmelder: **PKU Pulverkautschuk Union GmbH
45764 Marl (DE)**

(72) Erfinder:
- **Görl, Udo, Dr.
45657 Recklinghausen (DE)**
- **Gouw, Andreas
45721 Haltern (DE)**
- **Schmitt, Matthias
69151 Neckargemünd (DE)**
- **Stober, Reinhard, Dr.
63594 Hasselroth (DE)**

(54) **Pulverförmige, modifizierte aus Fällsuspensionen hergestellte silikatische Füllstoffe enthaltene Kautschukpulver, Verfahren zu ihrer Herstellung und Verwendung**

(57) Die vorliegende Anmeldung beschreibt ein Verfahren zur Herstellung von kieselsäuregefüllten Pulverkautschuken ausgehend von einer salzreichen Kieselsäurefällsuspension und die Anwendung der Produkte in vulkanisierbaren Kautschukmischungen.

EP 1 209 193 A2

Printed by Jouve, 75001 PARIS (FR)

## Beschreibung

Die Erfindung betrifft ein Verfahren zur Herstellung von organosilan-modifizierten silikatischen Füllstoffen, insbesondere gefällte Kieselsäuren enthaltene Kautschukpulver, wobei als Ausgangsfüllstoff eine aus Wasserglas und Schwefelsäure entstandene stark salzhaltige, insbesondere natriumsulfathaltige Kieselsäurefällsuspension dient sowie die so hergestellten Pulver.

Über die Herstellung von Pulverkautschuken (Kautschukpulver) ist eine Vielzahl von Publikationen erschienen [1-3]. Im großen und ganzen lässt sich sagen, dass diese Produkte über eine gemeinsame Fällung einer wässrigen Füllstoffsuspension (u.a. gefällte Kieselsäure) und einer Latexemulsion mittels einer Lewis- oder Brönstedsäure hergestellt werden.

Das nachfolgende Bild [1] zeigt schematisch die Herstellung und Aufarbeitung von gefällten Kieselsäuren, wie sie heute im Maßstab einiger hunderttausend Tonnen pro Jahr in der Gummiindustrie eingesetzt werden.

Kieselsäure entsteht i.d.R. durch Fällung einer Alkalisilikatlösung mittels Schwefelsäure gemäß nachfolgender Gleichung

$$\underbrace{(Na_2O \text{ x } 3{,}3\ SiO_2)}_{\text{Natriumwasserglas}} + H_2SO_4 \longrightarrow \underbrace{3{,}3\ SiO_2}_{\text{Kieselsäure}} + H_2O + Na_2SO_4$$

Dies bedeutet, dass nach der Fällung im Wasser (Fällsuspension) 3,3 Mol $SiO_2$ (Kieselsäure) und 1 Mol Alkalisulfat (i.d.R. $Na_2\ SO_4$) vorliegen. Der nachfolgende Filtrationsschritt dient dazu, den größten Teil des Wassers abzutrennen und gleichzeitig in einem aufwendigen Waschschritt das Alkalisulfat aus der Kieselsäure zu entfernen. Das Kieselsäurefällprodukt nach der Filterpresse bezeichnet man allgemein als Filterkuchen. Dieser enthält ca. 20 % Feststoff und 80 % Wasser. Sämtliches Wasser muss anschließend in einem energieaufwendigen Trocknungsprozess entfernt werden. Die darauf folgenden Schritte wie Vermahlen und Granulieren dienen der weiteren Aufarbeitung der Kieselsäure für die notwendige Bereitstellung und Verwendung in der Gummiindustrie.

Die bis heute erschienenen Veröffentlichungen und Patente [5,6] zur Herstellung silikatischer Füllstoffe, insbesondere Kieselsäurefüllstoffe enthaltene Pulverkautschuke gehen von salzfrei gewaschenem Filterkuchen oder gar von getrockneter Kieselsäure aus. Dies bedeutet, die Kieselsäure wurde bereits vor ihrem Einsatz im Pulverkautschuk hinsichtlich der Geräteinvestition und des Energie- und Resourceneinsatzes mit hohen Kosten belegt.

Ein Ziel der Erfindung ist daher die Herstellung von pulverförmigen, gefällte silikatische Füllstoffe enthaltene Kautschukpulver, ausgehend von einer salzhaltigen Kieselsäuresuspension.

Seit dem Einsatz von hochaktiven gefällten Kieselsäurefüllstoffen in Laufflächenmischungen, die seit Beginn der neunziger Jahre in verstärktem Maße Anwendung finden, wenn es darum geht, Rollwiderstand (Kraftstoffeinsparung) und Nassrutschverhalten zu verbessern, kommt man um den Einsatz von bifunktionellen Organosilanen zur Erzielung guter Reifeneigenschaften nicht vorbei [7-9].

Bis-(triethoxysilylpropyl)di- und tetrasulfan (TESPD bzw. TESPT) stellen dabei die wichtigsten Vertreter in der Gummiindustrie dar [10]. Beide Silane reagieren über ihre Triethoxysilylgruppen bei erhöhten Temperaturen mit den Silanolgruppen der Kieselsäure. Diese Reaktion kann vom Anwender während der Gummimischungsherstellung im Innenmischer oder auf der Walze durchgeführt werden [11-13]. Eine weitere Möglichkeit besteht darin, Kieselsäurefüllstoff und Organosilan außerhalb der eigentlichen Gummiherstelllung miteinander umzusetzen. Man spricht dann von einem vormodifizierten Füllstoff [14]. Zahlreiche Verfahren hierzu sind in der Literatur beschrieben.

Unter der Nummer 198 16 972.8 wurde ein Fällverfahren zur Herstellung von Pulverkautschuk angemeldet, bei dem Suspensionen dieser mit Organosiliciumverbindungen vormodifizierten Füllstoffe hergestellt und diese in die Kautschukemulsion eingerührt werden.

DE 198 43 301.8 beschreibt ein Verfahren, das mit weniger Verfahrensstufen zu einem vorteilhaft einzusetzenden Kautschukpulver führt. Man geht hierbei von der direkten Zugabe des Silans zur Kieselsäuresuspension aus, wobei als Kieselsäureausgangsstoff der Filterkuchen bzw. das getrocknete Produkt eingesetzt wird.

Gegenstand der Erfindung ist ein Verfahren zur Herstellung feinteiliger Kautschuk-Füllstoff-Compounds (Kautschukpulver) durch Ausfällen aus wasserhaltigen Mischungen, die Füllstoff in Form einer alkalisulfathaltigen Kieselsäurefällsuspension, wasserlösliche Salze eines Metalls der Gruppen IIa, IIb, IIIa und VIII des periodischen Systems der Elemente und einen Kautschuklatex, eine wässrige Emulsion eines Kautschuks oder eine Kautschuklösung enthalten, wird, wobei man

a) eine oder mehrere Organosiliciumverbindung(en), die mindestens eine Alkoxygruppe enthalten, in Wasser gelöst oder gegebenenfalls in Anwesenheit einer oberflächenaktiven Substanz emulgiert, oder die genannten Verbindungen direkt, gegebenenfalls mit einer oberflächenaktiven Substanz mit der Kieselsäurefällsuspension bei einer Temperatur von 10 bis 60 °C, bevorzugt bei Raumtemperatur, unter Rühren vermischt, wobei man die für die Einarbeitung in den Kautschuk vorgesehene Menge dieses Gemisches, bezogen auf den Füllstoffanteil alleine oder besonders bei niedrigen Füllgraden in zwei Partien aufteilt, und zwar im letzteren Falle

b) eine erste Partie mit dem Polymerlatex, der Polymeremulsion bzw. der Polymerlösung vermischt, den pH-Wert dieser Mischung mit einer Säure, insbesondere einer Lewissäure, auf einen pH-Wert von 8,0 bis 6,5 absenkt (erste Partie, erste Stufe),

c) den restlichen Anteil (zweite Partie, Splittinganteil) unter weiterer Absenkung des pH-Wertes auf 6,5 bis 2,6 insbesondere 5,5 - 4 zusetzt (zweite Stufe), so dass der noch in der Mischung befindliche Kautschuk zusammen mit dem durch Organosiliciumverbindung(en) modifizierten Füllstoff ausfällt

d) den ausgefallenen Feststoff mit an sich bekannten Maßnahmen abtrennt und

e) den abgetrennten Feststoff gegebenenfalls in mehreren Waschgängen salzfrei und pH-neutral wäscht

f) den füllstoffhaltigen Kautschuk trocknet.

Die Trocknung erfolgt vorteilhaft in einem Trockner bei einer Gaseintrittstemperatur von 140 bis 160°C und einer Gasaustrittstemperatur von 50 bis 70°C. Die Temperatur des Produkts sollte 100 bis 120 °C nicht überschreiten.

Die von dem pH-Wert und dem Füllstoffgehalt abhängige Dauer und der Umfang des Ausfällvorgangs kann innerhalb einer Messreihe einfach festgestellt werden.

Der Kieselsäurefüllgrad des Kautschukpulvers kann zwischen 5 und 1000 Teile bez. auf 100 Teile Kautschuk liegen.

Bei einem Pulverkautschuk mit Füllgraden > 80 phr ist i.d.R. kein Splittinganteil notwendig, da die Produkte nicht zum Kleben neigen.

Bei einem Pulverkautschuk mit Füllungsgrad zwischen 70 - 80 phr wird man im allgemeinen 0,5 bis 10 Teile dieser Menge als restlichen Anteil in der zweiten Stufe bei der Ausfällung des Pulverkautschuks einsetzen.

Enthält der Pulverkautschuk weniger als 70 Teile Füllstoff phr, z.B. nur insgesamt 50 Teile phr, führt man vor dem Abschluss des Fällvorgangs noch > 10 bis 20 Teile dieser Menge in Form einer Suspension in die Mischung ein.

Auf diese Weise werden die Füllstoffe in den äußeren Kornbereich (Randbereich) der Kautschukpulver eingebunden.

Diese Anteile des Füllstoffs sind damit nicht nur äußerlich auf die einzelnen Kautschukpartikel aufgezogen (s. DE-PS 37 23 213), sondern in die Kautschukoberfläche integriert.

Diese Füllstoffverteilung und die Art der Bindung der Füllstoffe in der Kautschukmasse bewirken die hohe Fließfähigkeit der erfindungsgemäßen Pulver und verhindern das Verkleben während der Lagerung der Pulver, ohne dass diese Eigenschaften durch mechanische Belastungen beim Fördern, Silieren etc. verloren gehen.

Als weitere Füllstoffe setzt man gegebenenfalls die aus der Gummiindustrie bekannten Ruße, bevorzugt in feinteiliger Form als Fluffy ein.

Dies erleichtert die Dispersion, so dass man ohne hohen Energieaufwand zu wässrigen Suspensionen mit Füllstoffpartikeln eines mittleren Teilchendurchmessers deutlich kleiner als 10 μm gelangt.

Als Metallsalze kommen solche in Frage, die von Elementen der Gruppen IIa, IIb, IIIa und VIII des periodischen Systems der Elemente stammen. Diese Gruppeneinteilung entspricht der alten IUPAC-Empfehlung (siehe Periodisches System der Elemente, Verlag Chemie, Weinheim, 1985) Typische Vertreter sind Magnesiumchlorid, Zinksulfat, Aluminiumchlorid, Aluminiumsulfat, Eisenchlorid, Eisensulfat, Kobaltnitrat und Nickelsulfat, wobei die Salze des Aluminiums bevorzugt sind. Besonders bevorzugt sind Aluminiumsulfat und weitere Lewissäuren.

Die Salze werden in einer Menge von 0,1 bis 6,5 Gewichtsteilen pro 100 Gewichtsteile Kautschuk eingesetzt. Die Metallsalze erweisen sich als besonders geeignet, die Korngröße der ausgefällten Produkte in gewünschter Weise zu beeinflussen. Zur Einstellung des gewünschten pH-Wertes verwendet man gegebenenfalls zusätzlich Mineralsäuren, wie z.B. Schwefelsäure, Phosphorsäure und Salzsäure, wobei die Schwefelsäure besonders bevorzugt ist. Eingesetzt werden können aber auch Carbonsäuren, wie z.B. Ameisen- und Essigsäure. Die Menge an Säure richtet sich nach der Art und Menge des wasserlöslichen Metallsalzes, des Füllstoffs, des eingesetzten Organosilans, des Kautschuks und des gegebenenfalls vorhandenen Alkalisilikats. Sie lässt sich durch einige orientierende Versuche leicht

ermitteln.

Im allgemeinen wird das erfindungsgemäße Verfahren wie folgt durchgeführt:
Zunächst wird die nach der Kieselsäurefällung erhaltene stark salzhaltige (i.d.R. $Na_2SO_4$) Kieselsäurefällsuspension gegebenenfalls zusammen mit dem Metallsalz, der Organosilanverbindung, gegebenenfalls in Gegenwart eines Emulgators vermischt.

Gemäß dem später gewünschten Füllstoffanteil im Endprodukt wird der entsprechende Splittinganteil (Füllgrade ≤ 80 phr) abgetrennt. Die Menge des insgesamt eingesetzten Wassers richtet sich nach der Art des Füllstoffs und dem Aufschlussgrad. Im allgemeinen liegen die nicht wasserlöslichen Bestandteile der Suspension bei etwa 4 bis 15 Gewichtsprozent. Dieser Wert stellt keine bindende Beschränkung dar und kann sowohl unter- als auch überschritten werden. Der maximale Gehalt wird durch die Pumpbarkeit der Suspension beschränkt.

Die so hergestellte Füllstoffsuspension wird anschließend mit dem gegebenenfalls Alkalisilikatlösung enthaltenden Kautschuk-Latex oder der gegebenenfalls Alkalisilikatlösung enthaltenden wässrigen Emulsion innig vermischt (erste Partie, erste Stufe bei Füllgraden ≤ 80 phr). Dazu eignen sich bekannte Rühraggregate, wie z.B. Propeller-Rührer.

Nach dem Mischen wird unter weiterem Rühren mittels Säurezugabe bevorzugt $Al_2(SO_4)_3$ die Fällung des homogenen Latex/Füllstoffgemisches durchgeführt. Hierbei hat man in Abhängigkeit vom späteren Füllgrad unterschiedliche Fällweisen wie folgt zu berücksichtigen:

a) Für Kieselsäurefüllgrade > 80 Teile bezogen auf 100 Teile Kautschuk (einstufige Fällweise)
Mit Hilfe der Säure wird in einem einstufigen Fällprozess ein End-pH-Wert von 8,5 - 2,8 bevorzugt 6,5 - 4,0 eingestellt. Ein Splittinganteil zur Reduzierung der Klebrigkeit ist aufgrund des hohen Füllgrades nicht notwendig.

b) Für Kieselsäurefüllgrade ≤ 80 Teile bezogen auf 100 Teile Kautschuk (zweistufige Fällweise)
Mit Hilfe der o.g. Säure wird zunächst ein pH-Wert im Bereich von 8,0 bis 5,0 eingestellt. Dabei fällt ein Kautschukgrundkorn mit einem konstanten Füllstoff- und Organosilangehalt an. Die Größe dieses Grundkorns wird durch die gewählte Metallsalzmenge im Bereich von 0,1 bis 6,5 phr gesteuert. Die Steuerung vollzieht sich so, dass mit der niedrigsten Menge an Metallsalz die größte Körnung erhalten wird.

Den restlichen Anteil der Füllstoff-Suspension (zweite Partie, Splittinganteil) setzt man unter weiterer Absenkung des pH-Wertes auf 6,5 bis 2,6, insbesondere ca. 5,5 - 4,0 zu (zweite Stufe), so dass der restliche sich noch in der Mischung befindliche Kautschuk zusammen mit dem durch Organosiliciumverbindung(en) modifizierten Füllstoff ausfällt. Der Füllstoff verbindet sich so mit dem Latex des Grundkorns, bildet aber darüber hinaus eine reine Füllstoffschicht (Kern/Schalen-Modell) um das Korn, die die Adhäsion mit einem benachbarten Korn unterdrückt.

Der Feststoffgehalt der eingesetzten Latices beläuft sich im allgemeinen auf 20 bis 60 Gew.-%. Der Feststoffgehalt der Kautschuklösungen beträgt im allgemeinen 3 bis 35 Gew.-%, der der Kautschukemulsionen im allgemeinen 5 bis 30 Gew.-%.

Das erfindungsgemäße Verfahren kann sowohl diskontinuierlich als auch kontinuierlich durchgeführt werden.

Das ausgefällte Kautschukpulver wird z.B. mit Hilfe einer Zentrifuge abgetrennt und dann auf einen Restwassergehalt von im allgemeinen 1 % getrocknet, insbesondere in einem Wirbelbetttrockner oder einem Kontakttrockner.

Die erfindungsgemäßen Kautschukpulver werden hergestellt unter Verwendung einer oder mehrerer Organosiliciumverbindungen der allgemeinen Formel

$$[R_n\text{-}(RO)_{3-n}Si\text{-}(Alk)_m\text{-}(Ar)_p]_q[B] \quad (I),$$

$$R^1{}_n(RO)_{3-n}Si\text{-}(Alk) \quad (II),$$

oder

$$R^1{}_n(RO)_{3-n}Si\text{-}(Alkenyl) \quad (III)$$

in denen bedeuten

B: -SCN, -SH, -Cl, $-NH_2$ (wenn q = 1) oder $-S_x-$ (wenn q = 2)
R und $R^1$: eine Alkylgruppe mit 1 bis 4 Kohlenstoffatomen, verzweigt oder nicht verzweigt, den Phenylrest, wobei

alle Reste R und $R^1$ jeweils die gleiche oder eine verschiedene Bedeutung haben können, bevorzugt eine Alkylgruppe,

R: eine $C_1$-$C_4$-Alkyl, - $C_1$-$C_4$-Alkoxygruppe, verzweigt oder nicht verzweigt,
n: 0; 1 oder 2,
Alk: einen zweiwertigen geraden oder verzweigten Kohlenstoffrest mit 1 bis 6 Kohlenstoffatomen,
m: 0 oder 1
Ar: einen Arylenrest mit 6 bis 12 C-Atomen
p: 0 oder 1 mit der Maßgabe, dass p und n nicht gleichzeitig 0 bedeuten,
x: eine Zahl von 2 bis 8,
Alkyl: einen einwertigen geraden oder verzweigten gesättigten Kohlenwasserstoffrest mit 1 bis 20 Kohlenstoffatomen, bevorzugt 2 bis 8 Kohlenstoffatomen,
Alkenyl: einen einwertigen geraden oder verzweigten ungesättigten Kohlenwasserstoffrest mit 2 bis 20 Kohlenstoffatomen, bevorzugt 2 bis 8 Kohlenstoffatomen.

Diese Verbindungen werden, wenn sie wasserlöslich sind, im allgemeinen in Form von Lösungen oder ansonsten in Form von Emulsionen eingesetzt, wobei die Emulsionen auch in Gegenwart der Kieselsäuresuspension gebildet werden können.
Man stellt die Emulsion oder Lösung bevorzugt bei Raumtemperatur her. Es sind aber auch Temperaturen von 10 bis 60°C geeignet.
Die Konzentration der Organosilanverbindung(en) in der Suspension beläuft sich auf 0,5 bis 20 Gew.-%, bevorzugt 5 bis 12 Gew.-%, bezogen auf die Gesamtmenge des eingesetzten Füllstoffs.
Unter dem verwendeten Begriff wasserunlöslich ist zu verstehen:
Nach dem Vermischen der Organosilanverbindung (ohne oberflächenaktive Substanz) mit der Suspension des Füllstoffs bildet sich um die Füllstoffteilchen herum im gewünschten pH- und Konzentrationsbereich keine klare Lösung. Es bleiben vielmehr die getrennten Phasen, die aus Wasser, Feststoff und Organosiliciumverbindung(en) bestehen. Die oligosulfidischen Organosilane gemäß der oben angegebenen allgemeinen Formel I sind an sich bekannt und können nach bekannten Verfahren hergestellt werden. Beispiele für vorzugsweise eingesetzten Organosilane sind die z.B. nach der BE-PS 787 691 herstellbaren Bis(trialkoxysilylalkyl)oligosulfide wie Bis-(trimethoxy-, triethoxy-, dimethoxy- ethoxy-, -tripropoxy-, - tributoxy-, -tri-i-propoxy- und -tri-i-butoxy-silyl-methyl)-oligosulfide und zwar insbesondere die Di-, Tri-, Tetra-, Penta-, Hexasulfide usw., weiterhin Bis-(2-tri-methoxy-, -triethoxy-, dimethoxyethoxy-, -tripropoxy- und -tri-n-und -i-butoxy-ethyl)oligosulfide und zwar insbesondere die Di-, Tri-, Tetra-, Penta-, Hexasulfide usw., ferner die Bis-(3-trimethoxy-, triethoxy-, dimethoxyethoxy-, tripropoxy-, tri-n-butoxy und tri-[i-butoxysilylpropyl]oligosulfide und zwar wiederum die Di-, Tri-, Tetrasulfide usw. bis zu Octasulfiden, des weiteren die entsprechenden Bis-(3-trialkoxysilylisobutyl)-oligosulfide, die entsprechenden Bis-(4-trialkoxysilylbutyl)-oligosulfide.
Von diesen ausgewählten, relativ einfach aufgebauten Organosilanen der allgemeinen Formel I werden wiederum bevorzugt die Bis-(3-trimethoxy-, triethoxy- und tripropoxysilylpropyl)oligosulfide, und zwar die Di-, Tri-, Tetra- und Pentasulfide, insbesondere die Triethoxyverbindungen mit 2,3 oder 4 Schwefelatomen und deren Mischungen. Alk bedeutet in der allgemeinen Formel I einen zweiwertigen, geraden oder verzweigten Kohlenwasserstoffrest, vorzugsweise einen gesättigten Alkylenrest mit gerader Kohlenstoffkette mit 1 bis 4 Kohlenstoffatomen.
Speziell geeignet sind auch die Silane mit der folgenden Strukturformel

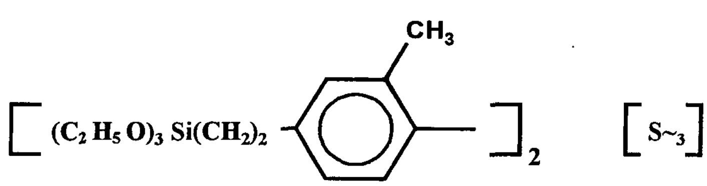

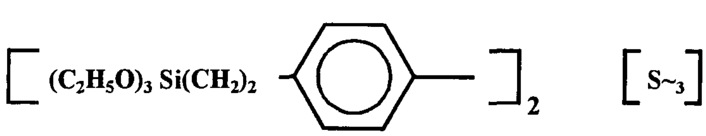

und deren Methoxyanaloge, herstellbar nach der DE-AS 25 58 191. Diese Verbindungen sind nicht wasserlöslich.
Als oberflächenaktive Substanzen finden in diesem Fall bevorzugt nichtionogene, kationische und anionische

Tenside Verwendung. Ihre Konzentration in der Emulsion beträgt 1 bis 15 Gew.-%, bevorzugt 2 bis 10 Gew.-%, bezogen auf die Menge an Organosilanverbindungen

Beispiele für derartige Tenside sind

> Alkylphenolpolyglycolether,
> Alkylpolyglycolether, Polyglycole,
> Alkyltrimethylammoniumsalze, Dialkyldimethylammoniumsalze,
> Alkylbenzyltrimethylammoniumsalze, Alkylbenzolsulfonate,
> Alkylhydrogensulfate, Alkylsulfate.

Die zu modifizierenden gefällten Kieselsäurefüllstoffe als Fällsuspension, auch als Gemisch von zwei oder mehreren dieser Füllstoffe, sind an sich in der Kautschuktechnologie bekannte KS-Füllstoffe.

Wesentliche Voraussetzung für ihre Eignung ist das Vorhandensein von Silanol-Gruppen an der Oberfläche der Füllstoffteilchen, die mit den Alkoxygruppen der Organosiliciumverbindungen reagieren können.

"Modifizierte Füllstoffe" bedeutet in diesem Zusammenhang, dass die Organosilanverbindungen entweder durch chemische Umsetzung (Si-OH-Gruppen) oder adsorptiv an die Oberfläche gebunden sind.

Die adsorptiv gebundenen Gruppen werden durch den Trocknungsschritt in chemisch gebundene umgewandelt.

Die Emulsion wird in derartigen Mengen mit der Füllstoffsuspension vermischt, so dass die Konzentration der Organosiliciumverbindung 0,5 bis 20 Gew.-%, bevorzugt 5 bis 12 Gew.-%, bezogen auf die Füllstoffmenge beträgt. Die modifizierten Füllstoffe enthalten 0,5 bis 20 Gew.-%, bevorzugt 0,5 bis 12 Gew.-% der Organosiliciumverbindungen, bezogen auf den trockenen Füllstoff.

Sie sind besonders geeignet zur Verwendung in vulkanisier- und formbaren Kautschukmischungen.

Die eingesetzten Kieselsäurefällsuspensionen sind Vorstufen für spätere Kieselsäuren wie sie aus dem Kautschuksektor bekannt sind. Die Fällsuspensionen besitzen Feststoffgehalte von 10 g - 130 g/l und pH-Werte im sauren Bereich. Für die Umsetzung zum Pulverkautschuk muss unter Umständen der pH-Wert auf einen Wert von 5 - 8, bevorzugt auf 7 eingestellt werden. Hierfür eignet sich z.B. Natronlauge.

Sie besitzen am trockenen Produkt gemessen im allgemeinen eine nach der bekannten BET-Methode bestimmte N2-Oberfläche von 35 bis 700 $m^2/g$, eine CTAB-Oberfläche von 30 bis 500 $m^2/g$, eine DBP-Zahl von 150 bis 400 ml/100 g.

Das erfindungsgemäße getrocknete Produkt, hergestellt aus einer KS-Fällsuspension enthält Kieselsäuren in einer Menge von 5 bis 1000 Teilen, insbesondere 20 bis 100 Teilen, bezogen auf 100 Teile Kautschuk.

Herstellbar sind auch füllstoffhaltige Kautschukpulver, die Kieselsäuren ausgehend von Kieselsäurefällsuspensionen und Ruß im Gemisch enthalten.

Besonders geeignet sind Ruße, wie sie allgemein in der Kautschukverarbeitung eingesetzt werden.

Dazu gehören Furnaceruße, Gas- und Flammruße mit einer Jodadsorptionszahl 5 bis 1000 $m^2/g$, einer CTAB-Zahl von 15 bis 600 $m^2/g$, einer DBP-Adsorption von 30 bis 400 ml/100 g und einer 24 M4 DBP-Zahl von 50 bis 370 ml/100 g in einer Menge von 5 bis 100 Teilen, insbesondere 20 bis 100 Teilen, auf 100 Teile Kautschuk.

Als Kautschuktypen einsetzbar und als wässrige Emulsionen darstellbar haben sich folgende Spezies gezeigt, einzeln oder im Gemisch miteinander:

> Naturkautschuk, Emulsions-SBR mit einem Styrolanteil von 10 bis 50 %, Butyl-Acrylnitril-Kautschuk. Butylkautschuke, Terpolymere aus Ethylen, Propylen (EPM) und nicht konjugierte Diene (EPDM),Butadienkautschuke, SBR, hergestellt nach dem Lösungspolymerisationsverfahren, mit Styrolgehalten von 10 bis 25 %, sowie Gehalten an 1,2-Vinylbestandteilen von 20 bis 55 % und Isoprenkautschuke, insbesondere 3,4-Polyisopren.

Bei nach Lösungsmittelverfahren hergestellten Polymerisaten sind besondere Vorsichtsmaßnahmen wegen des Lösungsmittelgehaltes zu treffen.

Neben den genannten Kautschuken kommen folgende Elastomere, einzeln oder im Gemisch, in Frage:

> Carboxylkautschuke, Epoxidkautschuke, Trans-Polypentenamer, halogenierte Butylkautschuke, Kautschuke aus 2-Chlor-Butadien, Ethylen-Vinylacetat-Copolymere, Epichlorhydrine, gegebenenfalls auch chemisch modifizierter Naturkautschuk, wie z.B. epoxidierte Typen.

Die erfindungsgemäßen Kautschukpulver enthalten neben den bereits genannten Füllstoffen gegebenenfalls bekannte Verarbeitungs- oder Vulkanisationshilfsmittel wie Zinkoxid, Zinkstearat, Stearinsäure, Polyalkohole, Polyamine, Weichmacher, Alterungsschutzmittel gegen Wärme, Licht oder Sauerstoff und Ozon, Verstärkerharze, Flammschutzmittel wie z.B. $Al(OH)_3$ und $Mg(OH)_2$, Pigmente, verschiedene Vernetzungschemikalien und gegebenenfalls

Schwefel in den gummitechnisch üblichen Konzentrationen.

Es gelingt erfindungsgemäß, feinteiliges, mit Organosiliciumverbindungen modifizierte Kieselsäure, ausgehend von Kieselsäurefällsuspension enthaltendes Kautschukpulver herzustellen, das rieselfähig ist und auch nach mechanischer Beanspruchung (z.B. Fördern, Verpacken) rieselfähig bleibt.

Aufgrund seiner Feinteiligkeit sind keine Mahl- oder sonstige Zerkleinerungsmaßnahmen notwendig, um feinteilige Dispersionen zu erhalten.

Diese führen dann zu den feinteiligen Kautschukpulvern, die sich leicht verarbeiten lassen und zu Vulkanisaten mit verbesserten Eigenschaften.

In den nachfolgenden Beispielen werden die Durchführbarkeit und die Vorteile der vorliegenden Erfindung erläutert, ohne dass sie auf diese demonstrierten Maßnahmen eingeschränkt sind.

**Eingesetzte Rohstoffe bei der Herstellung**

| | |
|---|---|
| E - SBR | Emulsions - Styrolbutadienlatex mit 23,5 % Styrolgehalt (BSL) |
| Si 69 | Bis(triethoxysilylpropyl)tetrasulfan (Degussa-Hüls AG) |
| Ultrasil 7000 | gefällte Kieselsäure mit einer N2-Oberfläche BET) von 185 $m^2$/g und verbesserten Dispergiereigenschaften (Degussa-Hüls AG) als Kieselsäurefällsuspension |
| Ultrasil VN 3 | gef. Standardkieselsäure mit einer $N_2$-Oberfläche von 175 $m^2$/g als Kieselsäurefällsuspension |
| Marlipal 1618/25 | Emulgator: Fettalkoholpolyethylenglykolether (Degussa-Hüls AG) |

**Beispiel I**

**Herstellung von Pulverkautschuk auf Basis E-SBR, Ultrasil 7000 Fällsuspension und Si 69**

Unter Rühren wird eine stabile Suspension aus 1792,7 g Ultrasil 7000 Fällsuspension (8,5 % Feststoffgehalt) Si 69 (entspricht 8 Teile bezogen auf 100 Teile getr. Kieselsäure), 1,6 g Marlipal 1618/25 (entspricht 1 % bez. auf die Kieselsäure) in 1,5 l Wasser hergestellt und anschließend so viel Suspension abgenommen, dass der Kieselsäureanteil für das Splitting ca. 7 Tle der Gesamtkieselsäuremenge entspricht.

Der Hauptanteil der Suspension wird mit 896,1 g einer 22,3%igen E-SBR Latexemulsion unter heftigem Rühren vermischt und anschließend durch Zugabe einer ca. 10%igen $Al_2(SO_4)_3$ Lösung auf einen pH-Wert von 5,5 abgesenkt. Diesem ersten Fällschritt folgt die Zugabe des wie oben hergestellten zweiten Teils der Suspension mit anschließender Absenkung des pH-Wertes auf einen Endpunkt von 4,0. Nach einer Nachreaktionszeit von ca. 5 min. wird der größte Teil des Wassers mechanisch abgetrennt, anschließend erfolgt ein Trocknungsschritt auf eine Restfeuchte von < 1 %. Das pulverförmige Fertigprodukt (EPR 1) enthält 100 Teile E-SBR und 80 Teile Ultrasil 7000 / Si 69 (8 Tle bez. auf 100 Tle Kieselsäure oder 6,5 phr), bestimmt mittels Thermogravimetrischer Analyse (TGA).

**Beispiel II**

Herstellung von Pulverkautschuk auf Basis E-SBR, Ultrasil VN 3 Fällsuspension und Si 69 (Füllgrad 80 phr, Silanmenge 6,5 phr):

Einwaagen und Vorgehensweise entsprechen Beispiel I. Lediglich anstelle des Ultrasil 7000 Fällsuspension wurde Ultrasil VN3 Fällsuspension eingesetzt.

Die TGA-Untersuchung des Fertigproduktes EPR 2 entsprach 77 phr Füllstoff.

In der gummitechnischen Anwendung wurden folgende Produkte eingesetzt:

**Mischungkomponenten**

| | |
|---|---|
| E-SBR 1500 | Styrol-Butadien Kautschuk mit 23,5 % Styrolgehalt (Ballenkautschuk) |
| Enerthene 1849-1 | arom. Mineralölweichmacher (BP) |
| EPR 1 | Pulverkautschuk, bestehend aus 100 Teilen E-SBR 1500, 80 Teilen Ultrasil 7000/Si 69 (6,5 phr) |

| | |
|---|---|
| | (aus Kieselsäurefällsuspension) |
| EPR 2 | Pulverkautschuk, bestehend aus 100 Teilen E-SBR 1500 - Latex, 77 phr Ultrasil VN3 (aus Fällsuspension) und 6,5 phr Si 69 |
| 6 PPD | N-(1,3 Dimethylbutyl)-N-phenyl-p-phenylendiamin |
| CBS | Benzothiazyl-2-cyclohexylsulfenamid |
| DPG | Diphenylguanidin |
| Ultrasil 7000 GR | Hochdispersive Reifenkieselsäure ($N_2$-Oberfläche 185 $m^2/g$), Degussa-Hüls AG |
| Ultrasil VN3 GR | Standardkieselsäure ($N_2$-Oberfläche175 $m^2/g$), Degussa-Hüls AG |

Folgende gummitechnische Prüfmethoden wurden angewandt:

| | |
|---|---|
| Vulkameter | DIN 53 529/3 |
| Zugversuch am Ring | DIN 53 504 |
| Shore Härte | DIN 53 505 |
| Bruchdehnung | DIN 53504 |
| Bruchenergie | DIN 53504 |
| Modul 300 % | DIN 53504 |

**Beispiel A**

**Vergleich des gummitechnischen Wertebildes des erfindungsgemäßen Produktes (Herstellungsbeispiel 1) gegen eine Standardmischung**

a) Rezeptur

| Mischung | 1 [phr] | 2 [phr] |
|---|---|---|
| SBR 1500 | 100 | - |
| EPR 1 | - | 180 |
| Ultrasil 7000 Gran | 80 | - |
| Si 69 | 6,5 | - |
| Enerthene 1849-1 | 30 | 30 |
| ZnO RS | 3 | 3 |
| Stearinsäure | 2 | 2 |
| 6 PPD | 2 | 2 |
| Wachs | 1 | 1 |
| CBS | 1,7 | 1,7 |
| DPG | 2 | 2 |
| Schwefel | 1,5 | 1,5 |

b) Mischverfahren

1. Stufe

| Innenmischer: GK 1,5 E; Volumen 1,5 L; Friktion 1 : 1 Stempel 5,5 bar | | |
|---|---|---|
| Mischung | 1 | 2 |
| Füllgrad | 0,55 | 0,6 |

(fortgesetzt)

<table>
<tr><td colspan="3">Innenmischer: GK 1,5 E; Volumen 1,5 L; Friktion 1 : 1 Stempel 5,5 bar</td></tr>
<tr><td>RPM<br>Durchflusstemperatur [°C]</td><td>50<br>60</td><td>40<br>60</td></tr>
<tr><td colspan="2">0 - 0,5' SBR 1500<br>0,5 - 1' ½ Ultrasil 7000, ½ Si 69, Öl, ZnO, Stearinsäure, Wachs<br>1 - 2' ½ Ultrasil 7000, ½ Si 69, 6 PPD<br>2' Säubern<br>2-4' Mischen und ausstoßen<br>Ausstoßtemperatur ~135°C</td><td>0 - 1' EPR 1, ZnO, Stearinsäure, Öl, 6 PPD, Wachs<br>1 - 4' Mischen und ausstoßen<br>Ausstoßtemperatur ~135°C</td></tr>
</table>

2. Stufe

| Innenmischer: | GK 1,5 E; Volumen 1,5L; Friktion 1:1; Stempel 5,5 bar; RPM 30; Füllgrad 0,53; Durchflusstemperatur 60°C |
|---|---|
| Beide Mischungen | |
| 0 - 1,5'<br>1,5' | Batch Stufe 1, Beschleuniger, Schwefel<br>Ausstoßen und Fell ausziehen |

c) Gummitechnisches Wertebild (Vulkanisationstemperaturen 165°C)

| | 1 Standard | ERB I |
|---|---|---|
| $D_{max}$ - $D_{min}$ [Nm] | 37,0 | 38,4 |
| $t_{10\%}$ [min] | 5,1 | 4,1 |
| $t_{90\%}$ [min] | 9,8 | 9,0 |
| $t_{90\%}$ - $t_{10\%}$ [min] | 4,7 | 4,9 |
| Zugfestigkeit [MPa] | 17,0 | 17,9 |
| Modul 300% [MPa] | 11,8 | 13,2 |
| Shore Härte | 61 | 70 |

Das erfindungsgemäße Produkt zeichnet sich durch ein höheres Verstärkungsverhalten als der Standard aus. M.a.W. es gelingt mit der Pulverkautschuktechnolgie aus einer Kieselsäurefällsuspension zu einem Produkt zu gelangen, das dem Wertebild einer Standardmischung, ausgehend von einem Ballenkautschuk und einem Kieselsäuregranulat entspricht, jedoch durch eine deutliche Reduzierung energie- und investitions-intensiver Verfahrensschritte erhalten wird.

Beispiel B: Vergleich des gummitechnischen Wertebildes des erfindungsgemäßen Produktes (EPR 2) gegen eine Standardmischung

a) Rezeptur

| Mischung | 1 Standard [phr] | 2 EPR 2 [phr] |
|---|---|---|
| SBR 150 | 100 | - |
| Ultrasil VN 3 GR | 75 | - |
| EPR 2 | - | 177 |
| Si 69 | 6,5 | - |
| ZnO RS | 3 | 3 |
| Stearinsäure | 2 | 2 |
| Enerthene 1849-1 | 15 | 25 |
| 6 PPD | 1,5 | 1,5 |
| Wachs | 1 | 1 |
| CBS | 1,7 | 1,7 |
| DPG | 2 | 2 |
| Schwefel | 1,5 | 1,5 |

b) Mischungsherstellung

siehe Beispiel A

c) Gummitechnisches Wertebild

| | 1 (Standard) | 2 (EPR 2) |
|---|---|---|
| Zugfestigkeit [MPa] | 17,4 | 20,8 |
| Modul 300 % [MPa] | 6,9 | 7,9 |
| Bruchdehnung [%] | 560 | 580 |
| Bruchenergie [J] | 131,7 | 166,5 |
| Shore Härte | 65 | 72 |

Das erfindungsgemäße Produkt zeigt Vorteile im Verstärkungsverhalten und in den Festigkeitswerten.

**Literatur**

1) U. Görl, K.H. Nordsiek, Kautsch. Gummi Kunstst. **51** (1998) 200
2) U. Görl, H. Lauer, Gummi Fasern Kunstst. **53** (2000) 261
3) U. Görl, M. Schmitt, Vortrag anlässlich des ACS-Meeting, Rubber Division Dallas, Texas, April 2000
4) S. Wolff, Vorlesungsscript Studium der Kautschuktechnologie der Universität Hannover
5) DE 198 16 972.8
6) DE 198 43 301.8
7) EP 0 501 227, US 5.227.425
8) G. Agostini, J. Bergh, Th. Materne; New Compound Technology, Oct. 1994, Akron, Ohio/USA
9) S. Wolff, The Influence of Fillers on Rolling Resistance, presented at the 129th Meeting of American Chemical Society, Rubber Division, New York, April 1986
10) U. Görl, Gummi Fasern Kunstst. **51** (1998) 416
11) U. Görl, A. Parkhouse, Kautschuk Gummi Kunstst. **52** (1999) 493

12) U. Görl, A. Hunsche "Advanced Investigations into the Silica/Silane Reaction System, presented at the ACS-Meeting, Rubber Division, Louisville, Kentucky/USA Oct. 1996
13) S. Wolff "The Role of Rubber to Silica Bond in Reinforcement, presented at the First Franco-German Rubber Symposium, Nov. 14-16, 1985, Obernai/France
14) U. Görl, R. Panenka, Kautschuk Gummi Kunstst. **46** (1993) 538

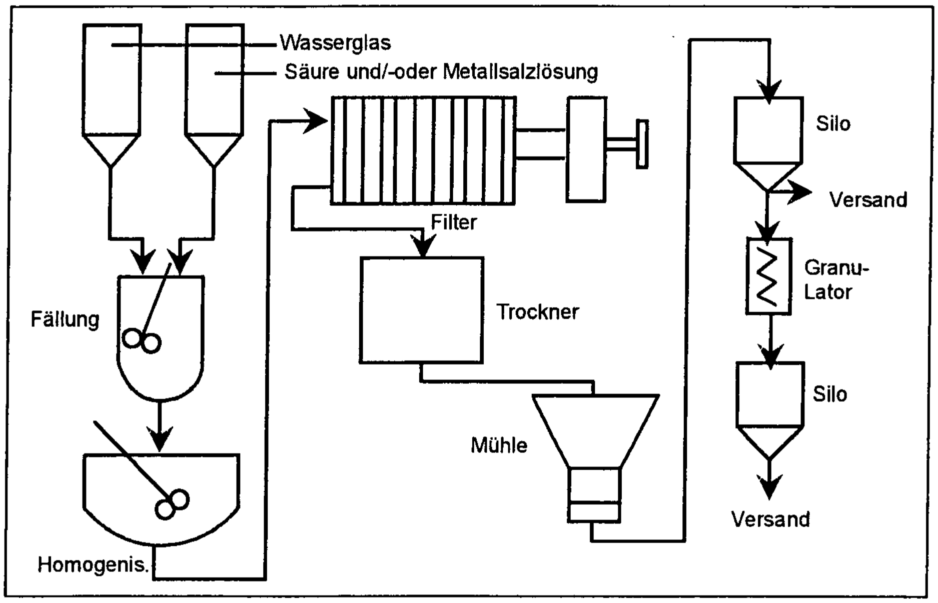


Bild 1: Schematische Darstellung der Kieselsäurefällung und Aufarbeitung

## Patentansprüche

1. Verfahren zur Herstellung von füllstoffhaltigem Kautschukpulver
**dadurch gekennzeichnet,**
**dass** als Füllstoff eine salzhaltige Kieselsäurefällsuspension eingesetzt wird.

2. Verfahren zur Herstellung von füllstoffhaltigem Kautschukpulver
**dadurch gekennzeichnet,**
**dass** der Kieselsäurefällstoff mit Organosiliciumverbindungen modifiziert wird.

3. Verfahren zur Herstellung von füllstoffhaltigem Pulverkautschuk nach Anspruch 1,
**dadurch gekennzeichnet,**
**dass** der Kieselsäurefällstoff mit Organosiliciumverbindungen folgender Formeln

$$[R_n\text{-}(RO)_{3-n}Si\text{-}(Alk)_m\text{-}(Ar)_p]_q[B] \quad (I),$$

$$R^1{}_n(RO)_{3-n}Si\text{-}(Alk) \quad (II),$$

oder

$$R^1{}_n\,(RO)_{3-n}Si\text{-(Alkenyl)} \qquad (III)$$

in denen bedeuten

| | |
|---|---|
| B: | -SCN, -SH, -Cl, $-NH_2$ (wenn q = 1) oder $-S_x-$ (wenn q = 2) |
| R und $R^1$: | eine Alkylgruppe mit 1 bis 4 Kohlenstoffatomen, verzweigt oder nicht verzweigt, den Phenylrest, wobei alle Reste R und $R^1$ jeweils die gleiche oder eine verschiedene Bedeutung haben können, bevorzugt eine Alkylgruppe, |
| R: | eine $C_1$-$C_4$-Alkyl, - $C_1$-$C_4$-Alkoxygruppe, verzweigt oder nicht verzweigt, |
| n: | 0; 1 oder 2, |
| Alk: | einen zweiwertigen geraden oder verzweigten Kohlenstoffrest mit 1 bis 6 Kohlenstoffatomen, |
| m: | 0 oder 1 |
| Ar: | einen Arylenrest mit 6 bis 12 C-Atomen |
| p: | 0 oder 1 mit der Maßgabe, dass p und n nicht gleichzeitig 0 bedeuten, |
| x: | eine Zahl von 2 bis 8, |
| Alkyl: | einen einwertigen geraden oder verzweigten gesättigten Kohlenwasserstoffrest mit 1 bis 20 Kohlenstoffatomen, bevorzugt 2 bis 8 Kohlenstoffatomen, |
| Alkenyl: | einen einwertigen geraden oder verzweigten ungesättigten Kohlenwasserstoffrest mit 2 bis 20 Kohlenstoffatomen, bevorzugt 2 bis 8 Kohlenstoffatomen. |

modifiziert ist.

**4.** Verfahren nach einem der vorherigen Ansprüche,
**dadurch gekennzeichnet,**
**dass** als Organosiliciumverbindungen Silane mit den Strukturformeln

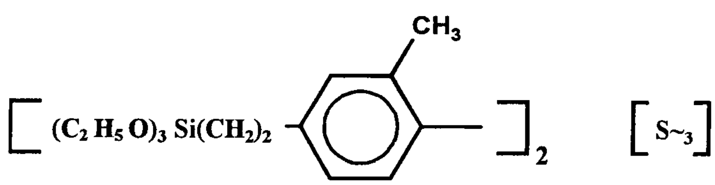

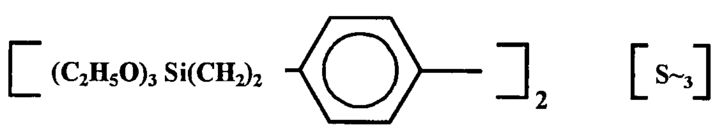

und deren Methoxyanaloge eingesetzt werden.

**5.** Verfahren nach einem der vorherigen Ansprüche,
**dadurch gekennzeichnet,**
**dass** die Organosiliciumverbindung entweder durch chemische Umsetzung oder adsorptiv an der Oberfläche der Kieselsäurefüllstoffteilchen gebunden ist.

**6.** Verfahren nach einem der vorherigen Ansprüche,
**dadurch gekennzeichnet,**
**dass** die eingesetzten Kieselsäurefällsuspensionen Feststoffgehalte von 10 g/l bis 130 g/l aufweisen.

**7.** Verfahren nach einem der vorherigen Ansprüche,
**dadurch gekennzeichnet,**
**dass** die Konzentration der Organosilanverbindung in der Suspension 0,5 bis 20 Gew.-%, bezogen auf die Gesamtmenge des eingesetzten Füllstoffs, beträgt.

8. Verfahren nach einem der vorherigen Ansprüche,
**dadurch gekennzeichnet,**
**dass** bei Kieselsäurefüllgraden zwischen 70 und 80 Teilen bezogen auf 100 Teile Kautschuk 0,5 bis 10 Teile dieser Menge als restlicher Anteil in der zweiten Stufe bei der Ausfällung des Pulverkautschuks eingesetzt wird.

9. Verfahren nach einem der vorherigen Ansprüche,
**dadurch gekennzeichnet,**
**dass** bei Kieselsäurefüllgraden von weniger als 70 Teilen bezogen auf 100 Teile Kautschuk vor Abschluss des Fällvorganges noch >10 bis 20 Teile dieser Menge in Form einer Suspension in die Mischung eingibt.

10. Verfahren nach einem der vorherigen Ansprüche,
**dadurch gekennzeichnet,**
**dass** füllstoffhaltige Kautschukpulver hergestellt werden durch Ausfällen aus wasserhaltigen Mischungen, die Füllstoff in Form einer alkalisulfathaltigen Kieselsäurefällsuspension, wasserlösliche Salze eines Metalls der Gruppen IIa, IIb, IIIa und VIII des periodischen Systems der Elemente und einen Kautschuklatex, eine wässrige Emulsion eines Kautschuks oder eine Kautschuklösung enthalten, wobei man

a) eine oder mehrere Organosiliciumverbindung(en), die mindestens eine Alkoxygruppe enthalten, in Wasser gelöst oder gegebenenfalls in Anwesenheit einer oberflächenaktiven Substanz emulgiert, oder die genannten Verbindungen direkt, gegebenenfalls mit einer oberflächenaktiven Substanz mit der Kieselsäurefällsuspension bei einer Temperatur von 10 bis 60 °C unter Rühren vermischt, wobei man die für die Einarbeitung in den Kautschuk vorgesehene Menge dieses Gemisches, bezogen auf den Füllstoffanteil alleine oder besonders bei niedrigen Füllgraden in zwei Partien aufteilt, und zwar im letzteren Falle

b) eine erste Partie mit dem Polymerlatex, der Polymeremulsion bzw. der Polymerlösung vermischt, den pH-Wert dieser Mischung mit einer Säure, insbesondere einer Lewissäure, auf einen pH-Wert von 8,0 bis 6,5 absenkt (erste Partie, erste Stufe),

c) den restlichen Anteil (zweite Partie, Splittinganteil) unter weiterer Absenkung des pH-Wertes auf 6,5 bis 2,6 zusetzt (zweite Stufe), so dass der noch in der Mischung befindliche Kautschuk zusammen mit dem durch Organosiliciumverbindung(en) modifizierten Füllstoff ausfällt

d) den ausgefallenen Feststoff mit an sich bekannten Maßnahmen abtrennt und

e) den abgetrennten Feststoff gegebenenfalls in mehreren Waschgängen salzfrei und pH-neutral wäscht

f) den füllstoffhaltigen Kautschuk trocknet.

11. Verfahren zur Herstellung von füllstoffhaltigem Kautschukpulver
**dadurch gekennzeichnet,**
**dass** in Gegenwart oberflächenaktiver Substanzen gearbeitet wird.

12. Verfahren nach einem der vorherigen Ansprüche,
**dadurch gekennzeichnet,**
**dass** neben der Kieselsäurefällsuspension Ruß eingesetzt wird.

13. Verfahren nach einem der vorherigen Ansprüche,
**dadurch gekennzeichnet,**
**dass** der Ruß in einer Menge von 5 bis 100 Teilen, auf 100 Teile Kautschuk, eingesetzt wird

14. Verfahren nach einem der vorherigen Ansprüche,
**dadurch gekennzeichnet,**
**dass** in Gegenwart von 0,1 bis 6,5 Teilen Metallsalzen, bezogen auf 100 Teile Kautschuk, der Gruppen IIa, IIb, IIIa und VIII des periodischen Systems gearbeitet wird.

15. Verfahren nach einem der vorherigen Ansprüche,

**dadurch gekennzeichnet,**
**dass** als Kautschuktypen einzeln oder im Gemisch miteinander Naturkautschuk, Emulsions-SBR mit einem Styrolanteil von 10 bis 50 %, Butyl-Acrylnitril-Kautschuk. Butylkautschuke, Terpolymere aus Ethylen, Propylen (EPM) und nicht konjugierte Diene (EPDM),Butadienkautschuke, SBR, hergestellt nach dem Lösungspolymerisationsverfahren, mit Styrolgehalten von 10 bis 25 %, sowie Gehalten an 1,2-Vinylbestandteilen von 20 bis 55 % und Isoprenkautschuke verwendet werden.

**16.** Verfahren nach einem der vorherigen Ansprüche,
**dadurch gekennzeichnet,**
**dass** man während der Ausfällung der Kautschukpulver weitere übliche Verarbeitungs- oder Vulkanisationshilfsmittel zusetzt.

**17.** Verfahren nach einem der vorherigen Ansprüche,
**dadurch gekennzeichnet,**
**dass** in Gegenwart von Alkalisilikat gearbeitet wird.

**18.** Verwendung der pulverförmigen füllstoffhaltigen Kautschukpulver zur Herstellung vulkanisierbarer Kautschukmischungen.